# EUROPEAN PATENT SPECIFICATION

(11) **EP 2 759 445 B1**
(45) Date of publication and mention of the grant of the patent: **21.11.2018**
(21) Application number: 13169143.8
(22) Date of filing: 24.05.2013
(51) Int. Cl.: B60Q 1/08

(54) **A controlling method and system based on the automotive lighting system illumination angle synchronizing with the automotive speed**
Steuerungsverfahren und -system basierend auf der Synchronisierung des Beleuchtungswinkels eines Kraftfahrzeugbeleuchtungssystems mit der Kraftfahrzeuggeschwindigkeit
Procédé et système de commande sur la base de l'angle d'éclairage d'un système d'éclairage d'automobile en synchronisation avec la vitesse de véhicule automobile

(30) Priority: 25.01.2013 CN 201310029436
(43) Date of publication of application: 30.07.2014
(73) Proprietor: Shenzhen Protruly Electronics Co., Ltd, Shenzhen 518109 (CN)
(72) Inventor: Zhuang, Min, Shenzhen 518109 (CN); Lu, Peng, Shenzhen 518109 (CN)
(74) Representative: Manitz Finsterwald Patentanwälte PartmbB

(56) References cited:
- EP-A2- 1 234 717
- DE-A1-102006 039 182
- US-A- 5 138 540
- US-A- 5 660 454
- US-A- 5 798 911
- US-A1- 2002 080 618
- US-A1- 2005 141 232
- US-A1- 2005 275 562
- US-A1- 2011 227 482

## Description

### TECHNICAL FIELD

The present invention relates to the field of automotive electronics, and more particularly to a lighting system synchronize with the automotive speed, and a controlling method based on the lighting system illumination angle synchronizing with the automotive speed. The features of the preamble of the independent claims are known from US 5 798 911 A. Related technologies are known from US 2005/141232 A1, US 5 660 454 A, US 2011/227482 A1 and EP 1 234 717 A2.

### BACKGROUND ART

With the development of science and technology as well as the improvement of people's living standards, driving automobiles is becoming more and more popular, and more and more families own their automobiles.

The existing automotive lighting system adjusts its illumination intensity according to the position of its filamentary cathode. When the cathode locates on its focus, high beam light will be emitted in parallel, and the light is more concentrated with a bigger brightness, and able to illuminate objects higher or farther away, while the cathode of a low beam light locates outside the focus, (between 1 and 2 times of the focus), light emitted will be divergent and will illuminate a larger scope nearby.

However, the viewing angle of human eyes is usually 120 degrees, and when one's attention is concentrated, his viewing angle is about one-fifth, that is 25 degrees only. Resolution sight of people, that is, discernible range without turning one's head, changes with the speed of the automobile and the concentration of one's attention. In the existing automotive lighting systems, both horizontal concentration angle and vertical concentration angle can be manually adjusted, but it is fixed during driving, thus it can't meet the drivers with dynamic perspective synchronizing with speed on demand.

Automotive lighting system of the prior art is working with fixed illumination angle and fixed illumination intensity, either changing the illumination intensity by changing the input power or adjusting the illumination distance through a reflector. The automotive lighting system of the prior art has no synchronizing ability between the viewing angle and the automotive speed, which is sometimes inconvenient for users.

Therefore, the prior art needs to be improved and developed.

### BRIEF SUMMARY OF THE INVENTION

The technical problems to be solved in the present invention is, aiming at the defects of the prior art, providing a controlling method and an application system based on the automotive lighting system illumination angle synchronizing with the automotive speed, which adds new functions to vehicle loaded lighting system, *i.e.,* its illumination angles synchronizing with the automotive speeds, thus the present invention improves the driving safety and provides conveniences to users.

The technical solution of present invention to solve the said technical problems is defined in the independent claims.

A controlling method is proposed as follows.

A controlling method based on the automotive lighting system illumination angle synchronizing with the automotive speed, wherein, it includes:
A. turn on the synchronization function that makes the illumination angle of automotive lighting system synchronize with the speed of the automobile, after receiving the according user's operation command;
B. obtain the current driving velocity of the automobile, and transform it into the current speed value; then determine its speed grade according to the current speed value;
C. based on the determined current speed grade, look up the prestored correspondence relationship table of illumination angle of lighting system synchronizing with each speed grade, find out the specific illumination angle synchronizing with current speed grade under current driving condition;
control the lighting system switching to the found specific illumination angle synchronizing with the current speed grade, and achieve synchronization between illumination angles and the automotive speeds.

The said controlling method based on the automotive lighting system illumination angle synchronizing with the automotive speed, wherein, the said illumination angles includes a horizontal concentration angle and a vertical concentration angle of the automotive lighting system, wherein, the said horizontal concentration angle is the angle of illumination range on a horizontal surface by the automotive lighting system, and the said vertical concentration angle is the angle of illumination range on a vertical surface by the automotive lighting system.

The said controlling method based on the automotive lighting system illumination angle synchronizing with the automotive speed, wherein, before the said step A it also comprises:
S. preinstall and save a correspondence relationship table of lighting system illumination angle synchronizing with the automotive speed grade.

The said controlling method based on the automotive lighting system illumination angle synchronizing with the automotive speed, wherein, the said step C of controlling the lighting system switching to the found specific illumination angle synchronizing with the current speed grade, and achieving synchronization between illumination angles and automotive speeds, also comprises:
C1: control the illumination angle synchronizing with automotive speed, while keeping the luminous power of the automotive lighting system unchanged.

The said controlling method based on the automotive lighting system illumination angle synchronizing with the automotive speed, wherein, the said step C according to the invention specifically comprises:
when the automotive speed grade is less than 20 km/h, control the horizontal concentration angle of the lighting system illumination angle to be 150 degrees, and vertical concentration angle to be 80 degrees;
when the automotive speed grade is between 20 and 29 km/h, control the horizontal concentration angle of the lighting system illumination angle to be 140 degrees, and vertical concentration angle to be 80 degrees;
when the automotive speed grade is between 30 and 39 km/h, control the horizontal concentration angle of the lighting system illumination angle to be 130 degrees, and vertical concentration angle to be 80 degrees;
when the automotive speed grade is between 40 and 49 km/h, control the horizontal concentration angle of the lighting system illumination angle to be 120 degrees, and vertical concentration angle to be 80 degrees;
when the automotive speed grade is between 50 and 59 km/h, control the horizontal concentration angle of the lighting system illumination angle to be 110 degrees, and vertical concentration angle to be 78 degrees;
when the automotive speed grade is between 60 and 69 km/h, control the horizontal concentration angle of the lighting system illumination angle to be 110 degrees, and vertical concentration angle to be 78 degrees;
when the automotive speed grade is between 70 and 79 km/h, control the horizontal concentration angle of the lighting system illumination angle to be 90 degrees, and vertical concentration angle to be 76 degrees;
when the automotive speed grade is between 80 and 89 km/h, control the horizontal concentration angle of the lighting system illumination angle to be 70 degrees, and vertical concentration angle to be 76 degrees;
when the automotive speed grade is between 90 and 99 km/h, control the horizontal concentration angle of the lighting system illumination angle to be 50 degrees, and vertical concentration angle to be 74 degrees;
when the automotive speed grade is between 100 and 109 km/h, control the horizontal concentration angle of the lighting system illumination angle to be 40 degrees, and vertical concentration angle to be 72 degrees;
when the automotive speed grade is between 110 and 119 km/h, control the horizontal concentration angle of the lighting system illumination angle to be 30 degrees, and vertical concentration angle to be 70 degrees;
when the automotive speed grade is more than 120 km/h, control the horizontal concentration angle of the lighting system illumination angle to be 30 degrees, and vertical concentration angle to be 70 degrees.

The said controlling method based on the lighting system illumination viewing angle of an automotive synchronizing with the automotive speed, wherein, the said step C further comprises:
C2: based on the determined current automotive speed grade, look up the prestored correspondence table of lighting system illumination intensity synchronizing with each speed grade, find out the specific illumination intensity of the lighting system synchronizing with current speed grade under current driving condition;
then control the lighting system switching to the found specific illumination intensity synchronizing with the current speed grade, and achieve the synchronization between illumination intensity and the automotive speed.

The said controlling method based on the automotive lighting system illumination angle synchronizing with the automotive speed, wherein, the said step C futher comprises:
control the lighting system illumination angle and illumination power synchronizing with the automotive speed according to the determined current automotive speed

Also proposed is a controlling system as follows:
a controlling system based on the automotive lighting system illumination angle synchronizing with the automotive speed, wherein, it comprises:
the receiving module, used to receive user's operation commands to turn on the synchronization function that makes the illumination angle of automotive lighting system synchronize with the speed of the automobile;
the obtaining and determination module, used to obtain the current driving speed of the automobile, and transform it into the current driving speed value, and then determine its speed grade according to the current speed value;
the controlling module, used to look up the prestored correspondence table of lighting system illumination angles synchronizing with each speed grade, find out the specific illumination angle synchronizing with current speed grade under current driving condition; then control the automotive lighting system switching to the found specific illumination angle synchronizing with current speed grade, and achieve the synchronization between illumination angles and the automotive speeds.

The controlling system based on the automotive lighting system illumination angle synchronizing with the automotive speed, wherein, it comprises:

The storage module, used to preinstall and save a correspondence relationship table of lighting system illumination angle synchronizing with the automotive speed grade;
the said controlling module also comprises:
the first control unit, used to control the illumination angle synchronizing with the automotive speed, while controlling the luminous power of the automotive lighting system unchanged;
the third control unit, used to control the illumination angle and luminous power of the automotive lighting system synchronizing with the automotive speed, based on the determined automotive speed grade;
the said illumination angles include both horizontal concentration angle and vertical concentration angle of the automotive lighting system, wherein, the said horizontal concentration angle is the angle of illumination range on a horizontal surface by the automotive lighting system, and the said vertical concentration angle is the angle of illumination range on a vertical surface by the automotive lighting system.

The controlling method and its application system based on the automotive lighting system illumination angle synchronizing with the automotive speed as provided in the present invention, works through obtaining the information such as the automotive speed, the speed changing rate and acceleration, etc. from the velocity acquisition devices (such as CAN, GPS, OBD, etc.), then the controlling system finds out the appropriate concentration ratio matching the current driving status, through the corresponding algorithms process. Finally, control the converging apparatus in the lighting system through controlling devices (such as motor, magnetic induction apparatus, etc.) and achieve the synchronization between the illumination angle and automotive speed. The present invention adds new function to the vehicle loaded lighting system, *i.e.,* the function of illumination angle synchronizing with the automotive speed. Through synchronizing with the automotive speed, automatically controls the concentration ratio, thus controls the illumination intensity and illumination angle, which lowers the inconvenience of switching high beam and low beam manually and brings a better visual effect to drivers, as well as avoids the abuse of high beams by some drivers, and improves the driving safety.

Without requiring any operations from the users during driving, the system can automatically adjust the angles of lighting apparatus under different automotive speeds, thus adjust the size of illumination angles, both broadening the driver's viewing range when the automobile is running at a low speed and making the distant road clearly seeable at a high speed to find the dangers ahead. At the same time, the system can also adjust the illumination intensity, thus saving the power when the automobiles is in a low speed driving condition and making up the weakness that human vision worsens due to physiological responses caused by attention concentrations in a high speed driving condition. Thus greatly improves the driving safety.

### BRIEF DESCRIPTION OF THE DRAWINGS

Figure 1 is the flow chart of a preferred embodiment of the controlling method of present invention based on the lighting system illumination angle synchronizing with the automotive speed.
Figure 2 is the diagram of the relationship between human eyes perspectives and automotive lighting system illumination angle in the present invention.
Figure 3 is the flow chart of the method in the controlling lighting system illumination intensity synchronizing with the automotive speed,based on the lighting system illumination angle synchronizing with the automotive speed in the present invention.
Figure 4 is the structure diagram of the principal in the controlling system based on the lighting system illumination angle synchronizing with the automotive speed of the present invention.
Figure 5 is the schematic diagram of principal structure of the controlling module in the controlling system of the present invention.

### DETAILED DESCRIPTION OF THE INVENTION

In order to make the purpose, technical solution and the advantages of the present invention clearer and more explicit, further detailed descriptions of the present invention is stated here, referencing to the attached drawings and some embodiments of the present invention. It should be understood that the detailed embodiments of the invention described here are used to explain the present invention only, instead of limiting the present invention.

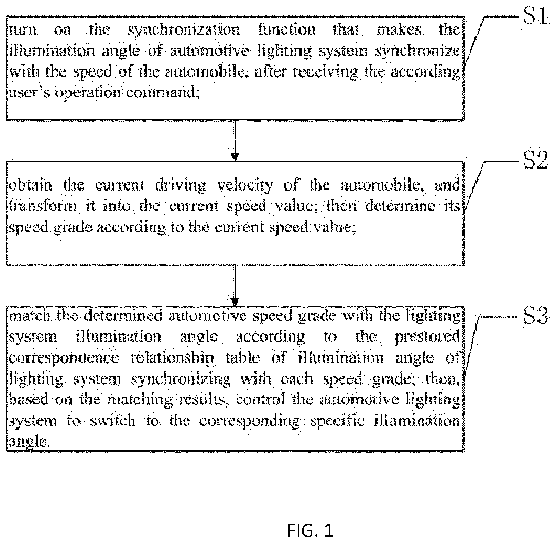

Refer to figure 1, which is the flow chart of a preferred embodiment of the controlling method of the present invention based on the lighting system illumination angle synchronizing with the automotive speed.

As shown in figure 1, the method comprises the following steps:
S1: turn on the function of lighting system illumination angle synchronizing with the automotive speed, after receiving the user's instructions.
First, the user switches on the device installed in the automobile which is able to accomplish the synchronous function between the lighting system illumination angle and the automotive speed, starting the function. The switching on action could be executed during driving or before driving, whenever the driver wants to use the function.
S2: obtain the current driving velocity of the automobile, and transform it into the current driving speed value; and based on this value, determine the corresponding speed grade of the current automotive velocity.
Through the speed acquisition devices (such as CAN bus, GPS, OBD etc.) to obtain the velocity, its changing rate and the acceleration information, as well as the current speed value, determine the corresponding speed grade of the current speed value according to the preinstalled automotive speed grade table.
In details,as shown in the table 1, 12 speed grades are set for the speeds in the speed grade table.

**Table 1: The automotive velocities and their corresponding speed grades.**

| Speed range (km/h) | less than 20 | 20 -29 | 30 -39 | 40 -49 | 50 -59 | 60 -69 | 70 -79 | 80 -89 | 90 -99 | 100 -109 | 110 -119 | more than 120 |
|---|---|---|---|---|---|---|---|---|---|---|---|---|
| Grade | 1 | 2 | 3 | 4 | 5 | 6 | 7 | 8 | 9 | 10 | 11 | 12 |

S3: Based on the determined current speed grade, look up the prestored correspondence table of illumination angles of the lighting system synchronizing with each speed grade, find out the specific illumination angle synchronizing with the current speed grade under the current driving condition;

Control the lighting system switching to the found specific illumination angle synchronizing with the current speed grade, and achieve the synchronization between illumination angles and the automotive speeds.

According to the specific speed grade determined in step S2 above, find out the corresponding specific synchronous lighting system illumination angle in the stored correspondence table of illumination angles synchronizing with the automotive speed grades.

The above said lighting system illumination angles includes a horizontal concentration angle and a vertical concentration angle, wherein, the said horizontal concentration angle is the angle of illumination range on a horizontal surface by the automotive lighting system, and the said vertical concentration angle is the angle of illumination range on a vertical surface by the automotive lighting system.

Particularly, the corresponding relationship table of automotive speed grade and lighting system illumination angle can be processed through the related algorithms, finds out the appropriate concentration ratio matching the current driving status.

The principle of the algorithm used is: under different automotive speeds, the matched illumination angle should be slightly greater than one's perspective, and there is no blind area between the two lamp irradiation areas. Based on the rule that one's resolution sight narrows when the speed of the automotive increases and his attention concentrates, the faster an automotive is, the narrower its illumination angle is. When the automotive is slow, which means the road condition is complicated, thus the irradiation distance should be closer; and when the automotive is running at a high speed, the road condition should be better, and the irradiation distance should be further. According to the law of conservation of energy, for a constant power illumination system, the narrower the irradiation angle is, the stronger the illumination intensity is.

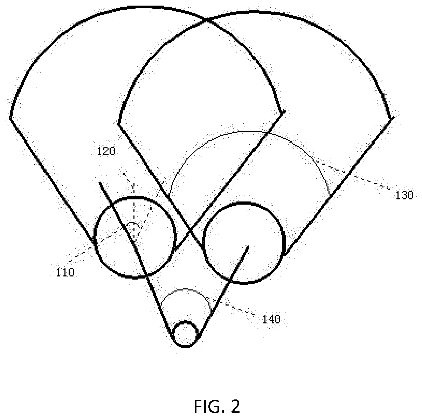

Figure 2 is showing the relationship diagram of lighting system illumination angle and the perspective of human eyes in the above principal, wherein, 110 represents the vertical concentration angle of the illumination system, 120 represents the horizontal line, 130 represents the horizontal concentration angle, while 140 represents the perspective of human eyes. From figure 2, it can be seen that, changes in the illumination angles will induce human visual sense differences.

Based on the said principle of the algorithm above, a correspondence relationship table of lighting system illumination angles synchronizing with the automotive speed grades, that is, a perfect synchronous relationship table between the automotive speed and its lighting system illumination angle is obtained, as shown in table 2 below:

**Table 2: The automotive velocities and their corresponding lighting system illumination angles in both horizontal and vertical concentration angles.**

| Speed range (km/h) | less than 20 | 20-29 | 30-39 | 40-49 | 50-59 | 60-69 | 70-79 | 80-89 | 90-99 | 100- 109 | 110- 119 | more than 120 |
|---|---|---|---|---|---|---|---|---|---|---|---|---|
| Horizontal concentratio n angle (°) | 150 | 140 | 130 | 120 | 110 | 110 | 90 | 70 | 50 | 40 | 30 | 30 |
| vertical concentratio n angle (°) | 80 | 80 | 80 | 80 | 78 | 78 | 76 | 76 | 74 | 72 | 70 | 70 |

Based on the illumination angle according to the current automotive speed, as found in the table 2 above, the lighting system is controlled so that its illumination angle changes to the according value, so that the synchronization between illumination angles and automotive speed is achieved.

In the embodiment of present invention, before the said step S1, a correspondence relationship table of lighting system illumination angle synchronizing with the automotive speed grade shall be preinstalled and saved.

The step S3 also comprises: the illumination angle is controlled synchronizing with the automotive speed, when the luminous power is controlled unchanged.

Due to the luminous power changes proportionally with the brightness of automotive lighting system and energy consumption, in the specific implementation process, the method of keeping the automotive luminous power as low as possible is generally applied to reduce the energy consumption. Data listed in table 2 above are the lighting system illumination angles applied to achieve the best illumination effects while the luminous power remains unchanged. Thus when an automobile is running, the illumination angle is controlled synchronizing with the automotive speed, while the luminous power of the automotive lighting system is controlled unchanged, and an optimal real time illumination effect is achieved while keeping the lighting system in low power consumption.

A DongFeng Citroen car is selected to be the test object. Before modifications, its lighting system was using a fixed illumination angle and illumination intensity. After modified following the present technical solution, the matching parameters between car speed and both horizontal and vertical concentration angles are shown in the following table 3 (Where, illumination intensity is recorded based on the comparison of illuminations at same position and under same speed, before and after modification. And, the value before modification is considered 100% as a reference.). Comparing to the driver's reaction before modification, the driving comfortable sensation is improved, especially during high speed driving at night, the visual effect gets improved significantly.

**Table 3: The relative illumination intensity after modifying the lighting system of a DongFeng Citroen car, adopting the parameters listed below.**

| Car speed (km/h) | <=10 | 20 | 30 | 40 | 50 | 60 | 70 | 80 | 90 | 100 | 110 | >=120 |
|---|---|---|---|---|---|---|---|---|---|---|---|---|
| Horizontal concentration angle (°) | 150 | 140 | 130 | 120 | 110 | 110 | 90 | 70 | 50 | 40 | 30 | 30 |
| Vertical concentration angle (°) | 80 | 80 | 80 | 80 | 78 | 78 | 76 | 76 | 74 | 72 | 70 | 70 |
| Illumination intensity after modification (%) | 105 | 109 | 117 | 122 | 127 | 130 | 134 | 136 | 138 | 142 | 149 | 150 |

Wherein, the percentage of illumination intensity after modifications is based on that before modifications, which is considered as 100%. Thus, 105% here means, after modifications, when the horizontal concentration angle was adjusted 150° and vertical angle 80°, the illumination intensity of the lighting system became 105% of that before modifications. Other datas refer to those listed in the table 3 in turn.

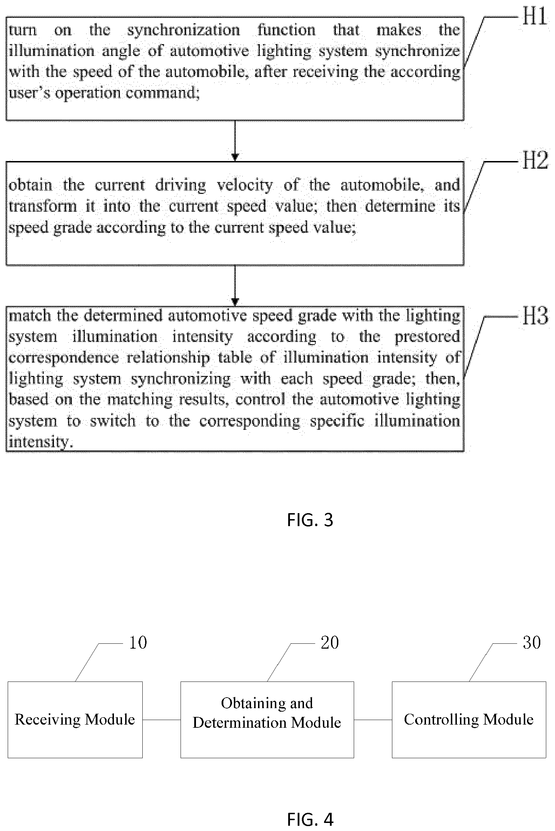

In addition, based on the preferred embodiment above, the present invention can also be achieved in the following manner:
Achieve the synchronization between illumination intensity and the automotive speed based on the correspondence relationship between the automotive speed and the illumination intensity, the detailed embodiment is shown in figure 3, the method comprises the following steps:
H1, turn on the synchronous change function between the automotive lighting system illumination intensity and the automotive speed, after receiving the user's instructions.
H2, read and obtain the current automotive driving velocity, and transform it into the velocity value, then, determine its speed grade based on this speed value.
H3, according to the determined automotive speed grade, look up the prestored correspondence relationship table of lighting system illumination intensity synchronizing with each speed grade, find out the specific illumination intensity synchronizing with the current speed grade under the current driving condition.

Control the automobile lighting system switching to the corresponding specific illumination intensity according to the found illumination intensity of the lighting system synchronizing with the current aumomotive speed grade and achieve the synchronization between the illumination intensity and the automotive speed.

Since the illumination angles of automobile are related to the illumination intensity, it is also possible to achieve the optimal illumination effect through controlling the automotive lighting system intensity.
In the specific embodiment, a corresponding synchronous table between the lighting system illumination intensity and automotive speed grade is preinstalled in the acquisition and determination modules in the device controlling the synchronization between automotive speed and lighting system illumination intensity. Find out the lighting system illumination intensity synchronizing with the current speed grade under current driving condition. Then based on this found specific illumination intensity, control the automotive lighting system switching to this illumination intensity value, and achieve the synchronization between illumination intensity and automotive speed.

The algorithm applied here is the same as in step S3 above, refer to table 3.
In addition, the present invention can also achieve the synchronization between the automotive speed and illumination angle, through the following method, *i.e.,* turning on the function of lighting system illumination angles synchronizing with the automotive speeds after receiving the user's instructions, obtaining the current velocity of the automobile, then determining the current automotive speed grade based on the current velocity value and finally controlling the lighting system illumination power synchronizing with the automotive speed while keeping the automotive lighting system illumination angle unchanged.
Due to the proportional relationship between the luminous power of automotive lighting system and its illumination intensity, it is possible to control the lighting system luminous power synchronizing with the automotive speed while keeping the automotive lighting system illumination angle unchanged.
From the above, the present invention provides a controlling method based on the automotive lighting system illumination angle synchronizing with the automotive speed. This method is shown as below: first receives a current automotive driving velocity value and compares this current automotive driving velocity value to the speed grade prestored in the system, finds out its speed grade, then matches the speed grade which has been founded out with the prestored correspondence relationship table between lighting system illumination angle and automotive speed grade, then obtains the best horizontal concentration angle and vertical concentration angle of the current lighting system, thus achieves the best illumination effects and provides a favorable diving condition.

Based on the embodiment above, the present invention also provides a controlling system based on the lighting system illumination angle of an automotive synchronizing with the automotive speed, as shown in figure 4, the system includes:
The receiving module 10, which is used to turn on the function of lighting system illumination angles synchronizing with the automotive speeds after receiving the user's instructions. The function of this module is the same as that stated in step S1 above.

The obtaining and determination module 20, which is used to read and obtain the current automotive driving velocity, and transform it into the current driving speed value, and determine the current speed grade based on this driving speed value. The function of this module is the same as stated in step S2 above.

The controlling module 30, which is used to look up the prestored correspondence relationship table of lighting system illumination angles synchronizing with speed grades, find out the specific synchronous illumination angle according to current speed grade under current driving condition; then control the automotive lighting system switching to the found specific illumination angle synchronizing with the current speed grade, and achieve the synchronization between illumination angles and the automotive speeds. The function of this module is the same as stated in step S3 above.

The above system also comprises a storage module, which is used to preinstall and save a correspondence relationship table of lighting system illumination angle synchronizing with the automotive speed grade.

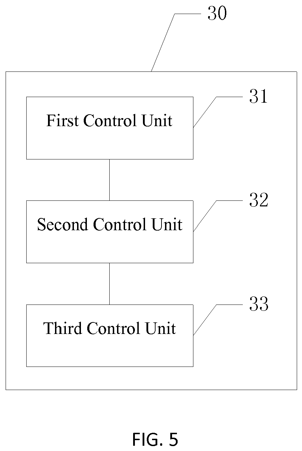

As shown in figure 5, the said controlling module 30 also comprises:
The first control unit 31,which is used to control the illumination angle synchronizing with the automotive speed, while controlling the luminous power of the automotive lighting system unchanged.

The second control unit 32 ,which is used to control the luminous power of the lighting system synchronizing with the automotive speed, while controlling the lighting system illumination angle unchanged.

The third control unit 33, which is used to control the illumination angle and luminous power of the automotive lighting system synchronizing with the automotive speed, based on the determined automotive speed grade.

Since it is possible to control the illumination angles, luminous power and illumination intensity of the lighting system synchronizing with the automotive speed separately, achieving the best illumination effects, thus, there are three modules installed in the controlling module 30, the first, second, and third controlling module, to control these three parameters.

In the system stated above, the said illumination angles include both horizontal concentration angles and vertical concentration angles of the automotive lighting system, wherein, the said horizontal concentration angle is the angle of illumination range on a horizontal surface by the automotive lighting system, and the said vertical concentration angle is the angle of illumination range on a vertical surface by the automotive lighting system.

The present invention discloses a controlling method and its application system based on the lighting system illumination angle of an automobile synchronizing with the automotive speed. The said method comprises the following steps: turn on the synchronization function that the automotive lighting system illumination angle synchronizing with the speed of the automobile, after receiving the user's operation commands; obtain the current velocity of the automobile, transform it into current driving speed value, and based on this speed value, determine the current automotive speed grade, then look up the prestored correspondence relationship table of lighting system illumination angles synchronizing with the speed grades, find out the specific illumination angle synchronizing with the current speed grade under current driving condition; then control the lighting system switching to the found specific synchronous illumination angle matching the current speed grade, and achieve the synchronization between illumination angles and the automotive speeds. When applying the method and the application system mentioned in the present invention, the best illumination effects for the automobile will be achieved, thus the present invention provides a safer lighting system with a better visual effect and provides conveniences to users.

In a summary, the controlling method and its application system based on the lighting system illumination angle of an automobile synchronizing with the automotive speed as provided in the present invention, works through reading the automotive speed, its changing rate and acceleration information from the velocity acquisition devices (such as CAN, GPS, OBD, etc.), then the controlling system finds out the appropriate concentration ratio matching the current driving status, through the corresponding algorithms process. Finally, control the converging apparatus in the lighting system through the controlling devices (such as the motor, the magnetic induction apparatus, etc.) and achieve synchronization between the illumination angle and automotive speeds. The present invention adds new function to the vehicle loaded lighting system, *i.e.,* the function of illumination angle synchronizing with the automotive speed. Through synchronization with the automotive speed, automatically controls the concentration ratio, thus controls the illumination intensity and illumination angle, which lowers the inconvenience of switching high beam and low beam manually and brings a better visual effect to drivers, as well as avoids the abuse of high beams by some drivers, and improves the driving safety.

Without requiring any operations from the users during driving, the system can automatically adjust the angles of lighting device under different automotive speeds, thus adjust the size of illumination angles, both broadening the driver's viewing range when the automobile is running at a low speed and making the distant road clearly seeable at a high speed to find the dangers ahead. At the same time, the system can also adjust the illumination intensity, thus saving the power in a low speed driving condition and making up the weakness that human vision worsens due to physiological responses caused by attention concentrations in a high speed driving condition. Thus greatly improves the driving safety.

It should be understood that, the application of the present invention is not limited to the above examples listed. It will be possible for a person skilled in the art to make modifications or replacements according to the above description, which shall all fall within the scope of the appended claims of the present invention.

## Claims

1. A controlling method based on an automotive lighting system illumination angle synchronizing with an automotive speed, comprising:
A. turning (S1) on a synchronization function that makes the automotive lighting system illumination angle synchronize with the automotive speed, after receiving a specific user's instruction;
B. obtaining (S2) a current automotive velocity, and transforming (S2) it into a current speed value; and determining (S2) a speed grade of the current speed value, according to the current speed value;
C. based on the determined speed grade, looking (S3) up a pre-stored correspondence relationship table of lighting system illumination angles synchronizing with respective speed grades, finding (S3) out a specific lighting system illumination angle synchronizing with the speed grade, and controlling (S3) the lighting system to switch to the found specific lighting system illumination angle synchronizing with the speed grade,
**characterized in that**
the lighting system illumination angle includes a horizontal concentration angle and a vertical concentration angle, wherein the horizontal concentration angle is the angle of illumination range on a horizontal surface by the automotive lighting system, and the vertical concentration angle is the angle of illumination range on a vertical surface by the automotive lighting system, wherein the pre-stored correspondence table is such that step C comprises:
when the speed grade of the automotive is less than 20 km/h, controlling the horizontal concentration angle of the lighting system illumination angle to be 150 degrees, and vertical concentration angle to be 80 degrees;
when the automotive speed grade is between 20 and 29 km/h, controlling the horizontal concentration angle of the lighting system illumination angle to be 140 degrees, and vertical concentration angle to be 80 degrees;
when the automotive speed grade is between 30 and 39 km/h, controlling the horizontal concentration angle of the lighting system illumination angle to be 130 degrees, and vertical concentration angle to be 80 degrees;
when the automotive speed grade is between 40 and 49 km/h, controlling the horizontal concentration angle of the lighting system illumination angle to be 120 degrees, and vertical concentration angle to be 80 degrees;
when the automotive speed grade is between 50 and 59 km/h, controlling the horizontal concentration angle of the lighting system illumination angle to be 110 degrees, and vertical concentration angle to be 78 degrees;
when the automotive speed grade is between 60 and 69 km/h, controlling the horizontal concentration angle of the lighting system illumination angle to be 110 degrees, and vertical concentration angle to be 78 degrees;
when the automotive speed grade is between 70 and 79 km/h, controlling the horizontal concentration angle of the lighting system illumination angle to be 90 degrees, and vertical concentration angle to be 76 degrees;
when the automotive speed grade is between 80 and 89 km/h, controlling the horizontal concentration angle of the lighting system illumination angle to be 70 degrees, and vertical concentration angle to be 76 degrees;
when the automotive speed grade is between 90 and 99 km/h, controlling the horizontal concentration angle of the lighting system illumination angle to be 50 degrees, and vertical concentration angle to be 74 degrees;
when the automotive speed grade is between 100 and 109 km/h, control the horizontal concentration angle of the lighting system illumination angle to be 40 degrees, and vertical concentration angle to be 72 degrees;
when the automotive speed grade is between 110 and 119 km/h, controlling the horizontal concentration angle of the lighting system illumination angle to be 30 degrees, and vertical concentration angle to be 70 degrees;
when the automotive speed grade is above 120 km/h, controlling the horizontal concentration angle of the lighting system illumination angle to be 30 degrees, and vertical concentration angle to be 70 degrees.

2. The controlling method of claim 1, comprising the following step before step A:
S. preinstalling and saving the correspondence relationship table.

3. The controlling method of claim 1, wherein controlling the lighting system to switch to the found lighting system illumination angle synchronizing with the speed grade in step C further comprises:
C1.controlling the lighting system illumination angles synchronizing with the automotive speeds, while controlling the luminous power of the automotive lighting system unchanged.

4. The controlling method of claim 1, wherein step C further comprises:
C2. according to the determined speed grade, looking up a pre-stored correspondence relationship table of lighting system illumination intensities synchronizing with respective speed grades, finding out a specific illumination intensity of the lighting system synchronizing with the speed grade;
according to the found specific illumination intensity of the lighting system synchronizing with the speed grade, controlling the automotive lighting system and switching it to a corresponding illumination intensity.

5. The controlling method of claim 4, wherein step C further comprises:
controlling the lighting system illumination angle and the luminous power synchronizing with the automotive speed according to the determined speed grade.

6. A controlling system based on an automotive lighting system illumination angle synchronizing with an automotive speed, comprising:
a receiving module (10), adapted to receive a user's instruction to turn on a synchronization function that makes the automotive lighting system illumination angle synchronize with the automotive speed;
an obtaining and determination module (20), adapted to obtain a current velocity of an automobile, and transform it into a current driving speed value, and determine a speed grade according to the current driving speed value;
a controlling module, adapted to look up a pre-stored correspondence relationship table of lighting system illumination angles synchronizing with respective speed grades, find out a specific illumination angle synchronizing with the speed grade; then control the lighting system to switch to the found specific illumination angle synchronizing with the speed grade,
**characterized in that**
the illumination angle includes a horizontal concentration angle and a vertical concentration angle of the automotive lighting system,
the horizontal concentration angle is an angle of illumination range on a horizontal surface by the automotive lighting system, and
the vertical concentration angle is an angle of illumination range on a vertical surface by the automotive lighting system,
wherein the pre-stored correspondence relationship table includes the following correspondence relationship:
when the speed grade of the automotive is less than 20 km/h, controlling the horizontal concentration angle of the lighting system illumination angle to be 150 degrees, and vertical concentration angle to be 80 degrees;
when the automotive speed grade is between 20 and 29 km/h, controlling the horizontal concentration angle of the lighting system illumination angle to be 140 degrees, and vertical concentration angle to be 80 degrees;
when the automotive speed grade is between 30 and 39 km/h, controlling the horizontal concentration angle of the lighting system illumination angle to be 130 degrees, and vertical concentration angle to be 80 degrees;
when the automotive speed grade is between 40 and 49 km/h, controlling the horizontal concentration angle of the lighting system illumination angle to be 120 degrees, and vertical concentration angle to be 80 degrees;
when the automotive speed grade is between 50 and 59 km/h, controlling the horizontal concentration angle of the lighting system illumination angle to be 110 degrees, and vertical concentration angle to be 78 degrees;
when the automotive speed grade is between 60 and 69 km/h, controlling the horizontal concentration angle of the lighting system illumination angle to be 110 degrees, and vertical concentration angle to be 78 degrees;
when the automotive speed grade is between 70 and 79 km/h, controlling the horizontal concentration angle of the lighting system illumination angle to be 90 degrees, and vertical concentration angle to be 76 degrees;
when the automotive speed grade is between 80 and 89 km/h, controlling the horizontal concentration angle of the lighting system illumination angle to be 70 degrees, and vertical concentration angle to be 76 degrees;
when the automotive speed grade is between 90 and 99 km/h, controlling the horizontal concentration angle of the lighting system illumination angle to be 50 degrees, and vertical concentration angle to be 74 degrees;
when the automotive speed grade is between 100 and 109 km/h, control the horizontal concentration angle of the lighting system illumination angle to be 40 degrees, and vertical concentration angle to be 72 degrees;
when the automotive speed grade is between 110 and 119 km/h, controlling the horizontal concentration angle of the lighting system illumination angle to be 30 degrees, and vertical concentration angle to be 70 degrees;
when the automotive speed grade is above 120 km/h, controlling the horizontal concentration angle of the lighting system illumination angle to be 30 degrees, and vertical concentration angle to be 70 degrees.

7. The controlling system claim 6, further comprising:
a storage module, adapted to preinstall and save the correspondence relationship table;
the controlling module (30) also includes:
a first control unit (31), adapted to control the illumination angle synchronizing with the automotive speed, while controlling the luminous power of the automotive lighting system unchanged;
a third control unit (33), adapted to control the illumination angle and luminous power of the automotive lighting system synchronizing with the automotive speed, based on the determined speed grade.

## Patentansprüche

1. Steuerungsverfahren basierend auf der Synchronisation eines Beleuchtungswinkels eines Kraftfahrzeuglichtsystems mit einer Kraftfahrzeuggeschwindigkeit, das umfasst, dass:
A. eine Synchronisationsfunktion eingeschaltet wird (S1), die bewirkt, dass der Beleuchtungswinkel des Kraftfahrzeuglichtsystems mit der Kraftfahrzeuggeschwindigkeit synchronisiert wird, nachdem eine spezielle Anweisung eines Nutzers empfangen wurde;
B. eine aktuelle Kraftfahrzeuggeschwindigkeit beschafft wird (S2) und diese in einen aktuellen Geschwindigkeitswert transformiert wird (S2); und in Übereinstimmung mit dem aktuellen Geschwindigkeitswert eine Geschwindigkeitsklassifizierung des aktuellen Geschwindigkeitswerts ermittelt wird (S2);
C. beruhend auf der ermittelten Geschwindigkeitsklassifizierung in einer vorab gespeicherten Korrespondenzbeziehungstabelle von Beleuchtungswinkeln des Lichtsystems, die mit jeweiligen Geschwindigkeitsklassifizierungen synchronisiert sind, nachgeschlagen wird (S3), ein spezieller Beleuchtungswinkel des Lichtsystems gefunden wird (S3), der mit der Geschwindigkeitsklassifizierung synchronisiert ist, und das Lichtsystem so gesteuert wird (S3), dass auf den gefundenen speziellen Beleuchtungswinkel des Lichtsystems, der mit der Geschwindigkeitsklassifizierung synchronisiert ist, umgeschaltet wird, **dadurch gekennzeichnet, dass**
der Beleuchtungswinkel des Lichtsystems einen horizontalen Konzentrationswinkel und einen vertikalen Konzentrationswinkel enthält, wobei der horizontale Konzentrationswinkel ein Winkel eines Beleuchtungsbereichs auf einer horizontalen Oberfläche durch das Kraftfahrzeuglichtsystem ist und der vertikale Konzentrationswinkel ein Winkel des Beleuchtungsbereichs auf einer vertikalen Oberfläche durch das Kraftfahrzeuglichtsystem ist,
wobei die vorab gespeicherte Korrespondenztabelle derart ist, dass Schritt C umfasst, dass:
wenn die Geschwindigkeitsklassifizierung des Kraftfahrzeugs niedriger als 20 km/h ist, der Beleuchtungswinkel des Lichtsystems so gesteuert wird, dass der horizontale Konzentrationswinkel 150 Grad beträgt und der vertikale Konzentrationswinkel 80 Grad beträgt;
wenn die Geschwindigkeitsklassifizierung des Kraftfahrzeugs zwischen 20 und 29 km/h liegt, der Beleuchtungswinkel des Lichtsystems so gesteuert wird, dass der horizontale Konzentrationswinkel 140 Grad beträgt und der vertikale Konzentrationswinkel 80 Grad beträgt;
wenn die Geschwindigkeitsklassifizierung des Kraftfahrzeugs zwischen 30 und 39 km/h liegt, der Beleuchtungswinkel des Lichtsystems so gesteuert wird, dass der horizontale Konzentrationswinkel 130 Grad beträgt und der vertikale Konzentrationswinkel 80 Grad beträgt;
wenn die Geschwindigkeitsklassifizierung des Kraftfahrzeugs zwischen 40 und 49 km/h liegt, der Beleuchtungswinkel des Lichtsystems so gesteuert wird, dass der horizontale Konzentrationswinkel 120 Grad beträgt und der vertikale Konzentrationswinkel 80 Grad beträgt;
wenn die Geschwindigkeitsklassifizierung des Kraftfahrzeugs zwischen 50 und 59 km/h liegt, der Beleuchtungswinkel des Lichtsystems so gesteuert wird, dass der horizontale Konzentrationswinkel 110 Grad beträgt und der vertikale Konzentrationswinkel 78 Grad beträgt;
wenn die Geschwindigkeitsklassifizierung des Kraftfahrzeugs zwischen 60 und 69 km/h liegt, der Beleuchtungswinkel des Lichtsystems so gesteuert wird, dass der horizontale Konzentrationswinkel 110 Grad beträgt und der vertikale Konzentrationswinkel 78 Grad beträgt;
wenn die Geschwindigkeitsklassifizierung des Kraftfahrzeugs zwischen 70 und 79 km/h liegt, der Beleuchtungswinkel des Lichtsystems so gesteuert wird, dass der horizontale Konzentrationswinkel 90 Grad beträgt und der vertikale Konzentrationswinkel 76 Grad beträgt;
wenn die Geschwindigkeitsklassifizierung des Kraftfahrzeugs zwischen 80 und 89 km/h liegt, der Beleuchtungswinkel des Lichtsystems so gesteuert wird, dass der horizontale Konzentrationswinkel 70 Grad beträgt und der vertikale Konzentrationswinkel 76 Grad beträgt;
wenn die Geschwindigkeitsklassifizierung des Kraftfahrzeugs zwischen 90 und 99 km/h liegt, der Beleuchtungswinkel des Lichtsystems so gesteuert wird, dass der horizontale Konzentrationswinkel 50 Grad beträgt und der vertikale Konzentrationswinkel 74 Grad beträgt;
wenn die Geschwindigkeitsklassifizierung des Kraftfahrzeugs zwischen 100 und 109 km/h liegt, der Beleuchtungswinkel des Lichtsystems so gesteuert wird, dass der horizontale Konzentrationswinkel 40 Grad beträgt und der vertikale Konzentrationswinkel 72 Grad beträgt;
wenn die Geschwindigkeitsklassifizierung des Kraftfahrzeugs zwischen 110 und 119 km/h liegt, der Beleuchtungswinkel des Lichtsystems so gesteuert wird, dass der horizontale Konzentrationswinkel 30 Grad beträgt und der vertikale Konzentrationswinkel 70 Grad beträgt;
wenn die Geschwindigkeitsklassifizierung des Kraftfahrzeugs über 120 km/h liegt, der Beleuchtungswinkel des Lichtsystems so gesteuert wird, dass der horizontale Konzentrationswinkel 30 Grad beträgt und der vertikale Konzentrationswinkel 70 Grad beträgt.

2. Steuerungsverfahren nach Anspruch 1, das den folgenden Schritt vor Schritt A umfasst, dass:
S. die Korrespondenzbeziehungstabelle vorinstalliert und gesichert wird.

3. Steuerungsverfahren nach Anspruch 1, wobei das Steuern des Lichtsystems zum Umschalten auf den gefundenen Beleuchtungswinkel des Lichtsystems, der mit der Geschwindigkeitsklassifizierung synchronisiert ist, in Schritt C ferner umfasst, dass:
C1. die Beleuchtungswinkel des Lichtsystems, die mit den Kraftfahrzeuggeschwindigkeiten synchronisiert sind, gesteuert werden, während die Lichtleistung des Kraftfahrzeuglichtsystems unverändert gesteuert wird.

4. Steuerungsverfahren nach Anspruch 1, wobei Schritt C ferner umfasst, dass:
C2. in Übereinstimmung mit der ermittelten Geschwindigkeitsklassifizierung in einer vorab gespeicherten Korrespondenzbeziehungstabelle von Beleuchtungsintensitäten des Lichtsystems, die mit jeweiligen Geschwindigkeitsklassifizierungen synchronisiert sind, nachgeschlagen wird, wodurch eine spezielle Beleuchtungsintensität des Lichtsystems gefunden wird, die mit der Geschwindigkeitsklassifizierung synchronisiert ist;
in Übereinstimmung mit der gefundenen speziellen Beleuchtungsintensität des Lichtsystems, die mit der Geschwindigkeitsklassifizierung synchronisiert ist, das Kraftfahrzeuglichtsystem gesteuert wird und es auf eine entsprechende Beleuchtungsintensität umgeschaltet wird.

5. Steuerungsverfahren nach Anspruch 4, wobei Schritt C ferner umfasst, dass:
der Beleuchtungswinkel des Lichtsystems und die Lichtleistung, die mit der Kraftfahrzeuggeschwindigkeit synchronisiert sind, in Übereinstimmung mit der ermittelten Geschwindigkeitsklassifizierung gesteuert werden.

6. Steuerungssystem basierend auf der Synchronisation eines Beleuchtungswinkels eines Kraftfahrzeuglichtsystems mit einer Kraftfahrzeuggeschwindigkeit, das umfasst:
ein Empfangsmodul (10), das angepasst ist, um die Anweisung eines Nutzers zum Einschalten einer Synchronisationsfunktion zu empfangen, die veranlasst, dass der Beleuchtungswinkel des Kraftfahrzeuglichtsystems mit der Kraftfahrzeuggeschwindigkeit synchronisiert wird;
ein Modul (20) zum Beschaffen und Ermitteln, das angepasst ist, um eine aktuelle Geschwindigkeit eines Kraftfahrzeugs zu beschaffen und um diese in einen aktuellen Fahrgeschwindigkeitswert zu transformieren, und um eine Geschwindigkeitsklassifizierung in Übereinstimmung mit dem aktuellen Fahrgeschwindigkeitswert zu bestimmen;
ein Steuerungsmodul, das angepasst ist, um in einer vorab gespeicherten Korrespondenzbeziehungstabelle von Beleuchtungswinkeln des Lichtsystems, die mit jeweiligen Geschwindigkeitsklassifizierungen synchronisiert sind, nachzuschlagen, um einen speziellen Beleuchtungswinkel zu finden, der mit der Geschwindigkeitsklassifizierung synchronisiert ist; um dann das Lichtsystem so zu steuern, dass auf den gefundenen speziellen Beleuchtungswinkel umgeschaltet wird, der mit der Geschwindigkeitsklassifizierung synchronisiert ist,
**dadurch gekennzeichnet, dass**
der Beleuchtungswinkel einen horizontalen Konzentrationswinkel und einen vertikalen Konzentrationswinkel des Kraftfahrzeuglichtsystems enthält,
wobei der horizontale Konzentrationswinkel ein Winkel eines Beleuchtungsbereichs auf einer horizontalen Oberfläche durch das Kraftfahrzeuglichtsystem ist, und
der vertikale Konzentrationswinkel ein Winkel eines Beleuchtungsbereichs auf einer vertikalen Oberfläche durch das Kraftfahrzeuglichtsystem ist,
wobei die vorab gespeicherte Korrespondenzbeziehungstabelle die folgende Korrespondenzbeziehung enthält:
wenn die Geschwindigkeitsklassifizierung des Kraftfahrzeugs niedriger als 20 km/h ist, der Beleuchtungswinkel des Lichtsystems so gesteuert wird, dass der horizontale Konzentrationswinkel 150 Grad beträgt und der vertikale Konzentrationswinkel 80 Grad beträgt;
wenn die Kraftfahrzeuggeschwindigkeitsklassifizierung zwischen 20 und 29 km/h liegt, der Beleuchtungswinkel des Lichtsystems so gesteuert wird, dass der horizontale Konzentrationswinkel 140 Grad beträgt und der vertikale Konzentrationswinkel 80 Grad beträgt;
wenn die Kraftfahrzeuggeschwindigkeitsklassifizierung zwischen 30 und 39km/h liegt, der Beleuchtungswinkel des Lichtsystems so gesteuert wird, dass der horizontale Konzentrationswinkel 130 Grad beträgt und der vertikale Konzentrationswinkel 80 Grad beträgt;
wenn die Kraftfahrzeuggeschwindigkeitsklassifizierung zwischen 40 und 49 km/h liegt, der Beleuchtungswinkel des Lichtsystems so gesteuert wird, dass der horizontale Konzentrationswinkel 120 Grad beträgt und der vertikale Konzentrationswinkel 80 Grad beträgt;
wenn die Kraftfahrzeuggeschwindigkeitsklassifizierung zwischen 50 und 59 km/h liegt, der Beleuchtungswinkel des Lichtsystems so gesteuert wird, dass der horizontale Konzentrationswinkel 110 Grad beträgt und der vertikale Konzentrationswinkel 78 Grad beträgt;
wenn die Kraftfahrzeuggeschwindigkeitsklassifizierung zwischen 60 und 69 km/h liegt, der Beleuchtungswinkel des Lichtsystems so gesteuert wird, dass der horizontale Konzentrationswinkel 110 Grad beträgt und der vertikale Konzentrationswinkel 78 Grad beträgt;
wenn die Kraftfahrzeuggeschwindigkeitsklassifizierung zwischen 70 und 79 km/h liegt, der Beleuchtungswinkel des Lichtsystems so gesteuert wird, dass der horizontale Konzentrationswinkel 90 Grad beträgt und der vertikale Konzentrationswinkel 76 Grad beträgt;
wenn die Kraftfahrzeuggeschwindigkeitsklassifizierung zwischen 80 und 89 km/h liegt, der Beleuchtungswinkel des Lichtsystems so gesteuert wird, dass der horizontale Konzentrationswinkel 70 Grad beträgt und der vertikale Konzentrationswinkel 76 Grad beträgt;
wenn die Kraftfahrzeuggeschwindigkeitsklassifizierung zwischen 90 und 99 km/h liegt, der Beleuchtungswinkel des Lichtsystems so gesteuert wird, dass der horizontale Konzentrationswinkel 50 Grad beträgt und der vertikale Konzentrationswinkel 74 Grad beträgt;
wenn die Kraftfahrzeuggeschwindigkeitsklassifizierung zwischen 100 und 109 km/h liegt, der Beleuchtungswinkel des Lichtsystems so gesteuert wird, dass der horizontale Konzentrationswinkel 40 Grad beträgt und der vertikale Konzentrationswinkel 72 Grad beträgt;
wenn die Kraftfahrzeuggeschwindigkeitsklassifizierung zwischen 110 und 119 km/h liegt, der Beleuchtungswinkel des Lichtsystems so gesteuert wird, dass der horizontale Konzentrationswinkel 30 Grad beträgt und der vertikale Konzentrationswinkel 70 Grad beträgt;
wenn die Kraftfahrzeuggeschwindigkeitsklassifizierung über 120 km/h liegt, der Beleuchtungswinkel des Lichtsystems so gesteuert wird, dass der horizontale Konzentrationswinkel 30 Grad beträgt und der vertikale Konzentrationswinkel 70 Grad beträgt.

7. Steuerungssystem nach Anspruch 6, das ferner umfasst:
ein Speichermodul, das angepasst ist, um die Korrespondenzbeziehungstabelle vorab zu installieren und zu sichern;
wobei das Steuerungsmodul (30) auch enthält:
eine erste Steuerungseinheit (31) die angepasst ist, um die Synchronisation des Beleuchtungswinkels mit der Kraftfahrzeuggeschwindigkeit zu steuern, während das Steuern der Lichtleistung des Kraftfahrzeuglichtsystems unverändert bleibt;
eine dritte Steuerungseinheit (33), die angepasst ist, um den Beleuchtungswinkel und die Lichtleistung des Kraftfahrzeuglichtsystems beruhend auf der ermittelten Geschwindigkeitsklassifizierung so zu steuern, dass sie mit der Kraftfahrzeuggeschwindigkeit synchronisiert werden.

## Revendications

1. Procédé de commande basé sur la synchronisation d'un angle d'illumination de système d'éclairage d'automobile avec une vitesse d'automobile, comprenant les étapes consistant à :
A. activer (S1) une fonction de synchronisation qui effectue la synchronisation de l'angle d'illumination de système d'éclairage d'automobile avec la vitesse d'automobile après réception d'une instruction spécifique de l'utilisateur ;
B. obtenir (S2) une vélocité d'automobile actuelle et la transformer (S2) en une valeur de vitesse actuelle ; et déterminer (S2) une classe de vitesse de la valeur de vitesse actuelle en fonction de la valeur de vitesse actuelle ;
C. sur la base de la classe de vitesse déterminée, consulter (S3) une table de relations de correspondance préalablement stockée d'angles d'illumination de système d'éclairage en synchronisation avec des classes de vitesse respectives, trouver (S3) un angle d'illumination de système d'éclairage spécifique en synchronisation avec la classe de vitesse, et commander (S3) le système d'éclairage pour passer à l'angle d'illumination de système d'éclairage spécifique trouvé en synchronisation avec la classe de vitesse,
**caractérisé en ce que**
l'angle d'illumination de système d'éclairage inclut un angle de concentration horizontal et un angle de concentration vertical, l'angle de concentration horizontal étant l'angle de la portée d'illumination sur une surface horizontale par le système d'éclairage d'automobile, et l'angle de concentration vertical étant l'angle de la portée d'illumination sur une surface verticale par le système d'éclairage d'automobile, la table de correspondance préalablement stockée étant telle que l'étape C consiste à :
lorsque la classe de vitesse de l'automobile est inférieure à 20 km/h, commander l'angle de concentration horizontal de l'angle d'illumination de système d'éclairage à 150 degrés et l'angle de concentration vertical à 80 degrés ;
lorsque la classe de vitesse d'automobile est comprise entre 20 et 29 km/h, commander l'angle de concentration horizontal de l'angle d'illumination de système d'éclairage à 140 degrés et l'angle de concentration vertical à 80 degrés ;
lorsque la classe de vitesse d'automobile est comprise entre 30 et 39 km/h, commander l'angle de concentration horizontal de l'angle d'illumination de système d'éclairage à 130 degrés et l'angle de concentration vertical à 80 degrés ;
lorsque la classe de vitesse d'automobile est comprise entre 40 et 49 km/h, commander l'angle de concentration horizontal de l'angle d'illumination de système d'éclairage à 120 degrés et l'angle de concentration vertical à 80 degrés ;
lorsque la classe de vitesse d'automobile est comprise entre 50 et 59 km/h, commander l'angle de concentration horizontal de l'angle d'illumination de système d'éclairage à 110 degrés et l'angle de concentration vertical à 78 degrés ;
lorsque la classe de vitesse d'automobile est comprise entre 60 et 69 km/h, commander l'angle de concentration horizontal de l'angle d'illumination de système d'éclairage à 110 degrés et l'angle de concentration vertical à 78 degrés ;
lorsque la classe de vitesse d'automobile est comprise entre 70 et 79 km/h, commander l'angle de concentration horizontal de l'angle d'illumination de système d'éclairage à 90 degrés et l'angle de concentration vertical à 76 degrés ;
lorsque la classe de vitesse d'automobile est comprise entre 80 et 89 km/h, commander l'angle de concentration horizontal de l'angle d'illumination de système d'éclairage à 70 degrés et l'angle de concentration vertical à 76 degrés ;
lorsque la classe de vitesse d'automobile est comprise entre 90 et 99 km/h, commander l'angle de concentration horizontal de l'angle d'illumination de système d'éclairage à 50 degrés et l'angle de concentration vertical à 74 degrés ;
lorsque la classe de vitesse d'automobile est comprise entre 100 et 109 km/h, commander l'angle de concentration horizontal de l'angle d'illumination de système d'éclairage à 40 degrés et l'angle de concentration vertical à 72 degrés ;
lorsque la classe de vitesse d'automobile est comprise entre 110 et 119 km/h, commander l'angle de concentration horizontal de l'angle d'illumination de système d'éclairage à 30 degrés et l'angle de concentration vertical à 70 degrés ;
lorsque la classe de vitesse d'automobile est supérieure à 120 km/h, commander l'angle de concentration horizontal de l'angle d'illumination de système d'éclairage à 30 degrés et l'angle de concentration vertical à 70 degrés.

2. Procédé de commande selon la revendication 1, comprenant, avant l'étape A, l'étape suivante consistant à :
S. préinstaller et enregistrer la table de relations de correspondance.

3. Procédé de commande selon la revendication 1, dans lequel la commande du système d'éclairage pour passer à l'angle d'illumination de système d'éclairage trouvé en synchronisation avec la classe de vitesse à l'étape C consiste en outre à :
C1. commander les angles d'illumination de système d'éclairage en synchronisation avec les vitesses d'automobile en laissant inchangée la puissance lumineuse du système d'éclairage d'automobile.

4. Procédé de commande selon la revendication 1, dans lequel l'étape C consiste en outre à :
C2. en fonction de la classe de vitesse déterminée, consulter une table de relations de correspondance préalablement stockée d'intensités d'illumination de système d'éclairage en synchronisation avec des classes de vitesse respectives, trouver une intensité d'illumination spécifique du système d'éclairage en synchronisation avec la classe de vitesse ;
en fonction de l'intensité d'illumination spécifique trouvée du système d'éclairage en synchronisation avec la classe de vitesse, commander le système d'éclairage d'automobile et le faire passer à une intensité d'illumination correspondante.

5. Procédé de commande selon la revendication 4, dans lequel l'étape C consiste en outre à :
commander l'angle d'illumination de système d'éclairage et la puissance lumineuse en synchronisation avec la vitesse d'automobile en fonction de la classe de vitesse déterminée.

6. Système de commande basé sur la synchronisation d'un angle d'illumination de système d'éclairage d'automobile avec une vitesse d'automobile, comprenant :
un module de réception (10), adapté à recevoir l'instruction d'un utilisateur d'activer une fonction de synchronisation qui effectue la synchronisation de l'angle d'illumination de système d'éclairage d'automobile avec la vitesse d'automobile ;
un module d'obtention et de détermination (20), adapté à obtenir une vélocité actuelle d'une automobile et à la transformer en une valeur de vitesse de conduite actuelle, et à déterminer une classe de vitesse en fonction de la valeur de vitesse de conduite actuelle ;
un module de commande adapté à consulter une table de relations de correspondance préalablement stockée d'angles d'illumination de système d'éclairage en synchronisation avec des classes de vitesse respectives, trouver un angle d'illumination spécifique en synchronisation avec la classe de vitesse ; puis commander le système d'éclairage pour passer à l'angle d'illumination spécifique trouvé en synchronisation avec la classe de vitesse,
**caractérisé en ce que**
l'angle d'illumination de système d'éclairage inclut un angle de concentration horizontal et un angle de concentration vertical du système d'éclairage d'automobile, l'angle de concentration horizontal étant un angle de la portée d'illumination sur une surface horizontale par le système d'éclairage d'automobile, et l'angle de concentration vertical étant un angle de la portée d'illumination sur une surface verticale par le système d'éclairage d'automobile, la table de relations de correspondance préalablement stockée incluant les relations de correspondance suivantes :
lorsque la classe de vitesse de l'automobile est inférieure à 20 km/h, commander l'angle de concentration horizontal de l'angle d'illumination de système d'éclairage à 150 degrés et l'angle de concentration vertical à 80 degrés ;
lorsque la classe de vitesse de l'automobile est comprise entre 20 et 29 km/h, commander l'angle de concentration horizontal de l'angle d'illumination de système d'éclairage à 140 degrés et l'angle de concentration vertical à 80 degrés ;
lorsque la classe de vitesse d'automobile est comprise entre 30 et 39 km/h, commander l'angle de concentration horizontal de l'angle d'illumination de système d'éclairage à 130 degrés et l'angle de concentration vertical à 80 degrés ;
lorsque la classe de vitesse d'automobile est comprise entre 40 et 49 km/h, commander l'angle de concentration horizontal de l'angle d'illumination de système d'éclairage à 120 degrés et l'angle de concentration vertical à 80 degrés ;
lorsque la classe de vitesse d'automobile est comprise entre 50 et 59 km/h, commander l'angle de concentration horizontal de l'angle d'illumination de système d'éclairage à 110 degrés et l'angle de concentration vertical à 78 degrés ;
lorsque la classe de vitesse d'automobile est comprise entre 60 et 69 km/h, commander l'angle de concentration horizontal de l'angle d'illumination de système d'éclairage à 110 degrés et l'angle de concentration vertical à 78 degrés ;
lorsque la classe de vitesse d'automobile est comprise entre 70 et 79 km/h, commander l'angle de concentration horizontal de l'angle d'illumination de système d'éclairage à 90 degrés et l'angle de concentration vertical à 76 degrés ;
lorsque la classe de vitesse d'automobile est comprise entre 80 et 89 km/h, commander l'angle de concentration horizontal de l'angle d'illumination de système d'éclairage à 70 degrés et l'angle de concentration vertical à 76 degrés ;
lorsque la classe de vitesse d'automobile est comprise entre 90 et 99 km/h, commander l'angle de concentration horizontal de l'angle d'illumination de système d'éclairage à 50 degrés et l'angle de concentration vertical à 74 degrés ;
lorsque la classe de vitesse d'automobile est comprise entre 100 et 109 km/h, commander l'angle de concentration horizontal de l'angle d'illumination de système d'éclairage à 40 degrés et l'angle de concentration vertical à 72 degrés ;
lorsque la classe de vitesse d'automobile est comprise entre 110 et 119 km/h, commander l'angle de concentration horizontal de l'angle d'illumination de système d'éclairage à 30 degrés et l'angle de concentration vertical à 70 degrés ;
lorsque la classe de vitesse d'automobile est supérieure à 120 km/h, commander l'angle de concentration horizontal de l'angle d'illumination de système d'éclairage à 30 degrés et l'angle de concentration vertical à 70 degrés.

7. Système de commande selon la revendication 6, comprenant en outre :
un module de stockage, adapté à préinstaller et enregistrer la table de relations de correspondance ;
le module de commande (30) inclut également :
une première unité de commande (31), adaptée à commander l'angle d'illumination en synchronisation avec la vitesse d'automobile en laissant inchangée la puissance lumineuse du système d'éclairage d'automobile ;
une troisième unité de commande (33), adaptée à commander l'angle d'illumination et la puissance lumineuse du système d'éclairage d'automobile en synchronisation avec la vitesse d'automobile, sur la base de la classe de vitesse déterminée.
